# EUROPEAN PATENT APPLICATION

(11) **EP 4 250 109 A1**
(43) Date of publication of application: **27.09.2023**
(21) Application number: 23161760.6
(22) Date of filing: 14.03.2023
(51) Int. Cl.: G06F 9/48, G06F 9/52, G06F 9/54

(54) **GRAPHICS PROCESSING UNIT INVOKING METHOD, CENTRAL PROCESSING UNIT AND APPARATUS**

(30) Priority: 24.03.2022 CN 202210297294
(71) Applicant: Beijing Tusen Zhitu Technology Co., Ltd., Beijing 100016 (CN)
(72) Inventor: SUN, Pangbo, Beijing, 100016 (CN); WU, Hao, Beijing, 100016 (CN); JIN, Jiangming, Beijing, 100016 (CN)
(74) Representative: Murgitroyd & Company

(57) **Abstract**

The present application provides a method for invoking a graphics processing unit, a central processing unit and an apparatus. The method is applied to the central processing unit, the central processing unit having a first process and a second process running therein, the method comprising: in response to an invoking instruction for invoking a programming interface corresponding to an execution task of the first process, invoking by the first process a hijacking code corresponding to the programming interface,; running by the first process the hijacking code to send a running request to a second process, wherein the running request is used for instructing the second process to invoke the programming interface; and invoking a graphics processing unit by the second process by invoking the programming interface in response to the running request, and then processing an execution task by the graphics processing unit.

## Description

The present disclosure claims priority to Chinese patent application No. 202210297294.3, titled "GRAPHICS PROCESSING UNIT INVOKING METHOD, CENTRAL PROCESSING UNIT AND APPARATUS", filed on March 24, 2022.

### TECHNICAL FIELD

The present application relates to the field of computers, and more particularly to a method for invoking a graphics processing unit, a central processing unit and an apparatus.

### BACKGROUND

As the fields of artificial intelligence and in-depth learning continue to evolve, computational tasks in these fields often require significant computational resources. However, to the limitation of central processing unit's running resources, when computing tasks need a large amount of computing resources, the central processing unit can not provide the computing results corresponding to computing tasks in time, and the processing efficiency is low.

At present, the graphics processing unit (GPU) has received extensive attention due to its powerful computing power. How to improve the processing efficiency of computing tasks by invoking graphics processing unit is an urgent problem.

### SUMMARY

The present application provides an invoking method for a graphics processing unit, a central processing unit and an apparatus for solving the problem of low processing efficiency of a central processing unit in the related art.

In a first aspect, the present application provides a method for invoking a graphics processing unit. The method is applied to a central processing unit, the central processing unit having a first process and a second process running therein, the method comprising:

in response to an invoking instruction which is used for instructing to invoke a programming interface corresponding to an execution task of the first process, invoking by the first process a hijacking code corresponding to the programming interface, wherein the hijacking code is used for instructing to send a running request;

running, by the first process, the hijacking code, and sending a running request corresponding to the first process to a second process, wherein the running request is used for instructing the second process to invoke the programming interface;

invoking by the second process a graphics processing unit via the programming interface corresponding to the first process in response to the running request corresponding to the first process.

In some embodiments, the programming interface has an invoking function identification for indicating a function type; the first process invoking the hijacking code corresponding to the programming interface comprises:

in response to the function type of the programming interface being a normal type, invoking by the first process the hijacking code corresponding to the invoking function identification of the programming interface according to a preset hijacking library, wherein the preset hijacking library comprises a plurality of hijacking codes.

In some embodiments, the method further comprises:
in response to the function type of the programming interface being a hidden type, determining, by the first process a hijacking pointer corresponding to the invoking function identification of the programming interface according to a preset hijacking library, and invoking the hijacking code corresponding to the hijacking pointer, wherein the hijacking pointer is used for indicating a location of the hijacking code corresponding to the programming interface.

In some embodiments, the execution task is used to characterize the first process sending storage data to a graphic memory in the graphics processing unit, the execution task comprising a first virtual address, the first virtual address being used for characterizing a storage address of the storage data for the first process; the method further comprises:
in response to the first virtual address being located in an address range corresponding to a first memory, converting, by the first process, the first virtual address into a second virtual address according to a pre-set mapping relationship, and sending by the first process the second virtual address to the second process; wherein the second virtual address is used for characterizing a storage address of the storage data for the second process; the first memory is a shared memory of the first process and the second process;
acquiring, by the second process, the storage data according to the second virtual address;
the second process invoking a graphics processing unit via the programming interface corresponding to the first process in response to the running request corresponding to the first process comprises:
in response to the running request corresponding to the first process, invoking, by the second process, a graphics processing unit via a programming interface corresponding to the first process and sending by the second process the storage data to the graphics processing unit.

In some embodiments, the method further comprises:
in response to the first virtual address being outside the address range corresponding to the first memory, sending, by the first process, the storage data acquired according to the first virtual address to the first memory;
acquiring the storage data from the first memory by the second process.

In some embodiments, the first memory comprises a first sub-memory and a second sub-memory; the sending by the first process the storage data acquired according to the first virtual address to the first memory comprises:
dividing, by the first process, the acquired storage data into a plurality of sub-storage data, and sequentially and alternately transmitting by the first process, the plurality of sub-storage data to the first sub-memory and the second sub-memory;
the acquiring the storage data from the first memory by the second process comprises:
alternately acquiring by the second process the plurality of sub-storage data from the first sub-memory and the second sub-memory.

In some embodiments, the first process sending a running request corresponding to the first process to a second process comprises:
sending by the first process a running request corresponding to the first process to a first message queue corresponding to the first process in the first memory; wherein the first memory is a shared memory of the first process and the second process; the first message queue corresponds to the first process on a one-to-one basis;
adjusting by the first process a first semaphore parameter corresponding to the first message queue, the first semaphore parameter being used for characterizing the number of readable running requests in the first message queue; and
acquiring by the second process the running request in the first message queue according to an adjusted first semaphore parameter.

In some embodiments, the sending by the first process a running request corresponding to the first process to a first message queue corresponding to the first process in the first memory comprises:
in response to a memory value occupied by the running request being less than or equal to a first value, sending the running request to the first message queue by the first process.

In some embodiments, the method further comprises:
in response to the memory value occupied by the running request being greater than the first value, sending by the first process the running request to a temporary memory in the first memory, and generating marking information and sending the same to the first message queue; wherein the temporary memory is a temporary memory area applied by the first process; the marking information indicates location information about the running request;
acquiring by the second process the running request in the first message queue according to the adjusted first semaphore parameter comprises:
acquiring by the second process the marking information in the first message queue according to the adjusted first semaphore parameter, and acquiring a running request in the temporary memory according to the marking information;
releasing the temporary memory by the second process.

In some embodiments, the method further comprises:
sending by the second process a running result returned by the graphics processing unit to a second message queue corresponding to the first process corresponding to the running result in the first memory, wherein the first memory is a shared memory of the first process and the second process; the second message queue corresponds to the first process on a one-to-one basis;
adjusting by the second process a second semaphore parameter corresponding to the second message queue, the second semaphore parameter being used for characterizing the number of readable running results in the second message queue; and
acquiring by the first process a running result in the second message queue according to the adjusted second semaphore parameter.

In some embodiments, the first process comprises a plurality of first threads, the first threads corresponding to first thread identification on a one-to-one basis; the running result has a first thread identification;
the acquiring by the first process a running result in the second message queue according to the adjusted second semaphore parameter comprises:
waking up by the first process the plurality of first threads in the first process according to the adjusted second semaphore parameter, so that the plurality of first threads respectively acquire a running result corresponding to the first thread identification of each of the first threads in the second message queue.

In some embodiments, the first process comprises a plurality of first threads, the first threads corresponding to first thread identification on a one-to-one basis; the running result has a first thread identification;
the acquiring by the first process a running result in the second message queue according to the adjusted second semaphore parameter comprises:
storing by the first process a running result in the second message queue in a container corresponding to the first thread identification in the running result according to the adjusted second semaphore parameter and a pre-set corresponding relationship between the first thread identification and the container, wherein the container is a storage structure in the form of a linked list; and
waking up by the first process the first thread corresponding to the container, so that the first thread acquires a running result corresponding to the first thread identification of the first thread from the corresponding container.

In some embodiments, the container is a plurality of containers and one container corresponds to a plurality of first thread identifications.

In some embodiments, prior to the first process responding to an invoking instruction, the method further comprises:
creating by the second process a second thread corresponding to the graphics processing unit in the second process;
sending by the first process a connection request corresponding to the first process to the second process, wherein the connection request characterizes establishing a communication connection with the second process;
creating by the second process a third thread corresponding to the first process in the second process in response to the connection request corresponding to the first process, the third thread being used for acquiring a running request sent by a first process corresponding thereto;
the second process invoking a graphics processing unit via the programming interface corresponding to the first process in response to the running request corresponding to the first process comprises:
invoking the second thread in the second process the graphics processing unit via the programming interface in response to a running request sent by the third thread.

In some embodiments, the programming interface has an invoking function identification; the second process invoking a graphics processing unit via the programming interface corresponding to the first process in response to the running request corresponding to the first process comprises:
in response to the invoking function identification corresponding to the programming interface being a synchronization function identification, invoking by the second process a replacement code corresponding to the invoking function identification of the programming interface according to a replacement library; wherein the replacement code is used for replacing a synchronous function code of the programming interface corresponding to the invoking function identification with an asynchronous function code; the replacement library comprises a plurality of replacement codes; and
invoking by the second process the graphics processing unit via the replacement code of the programming interface corresponding to the first process, and receiving an asynchronous notification returned by the graphics processing unit, wherein the asynchronous notification is used for instructing the second process to continue running the running request sent by the first process.

In some embodiments, the running request comprises interface information about the programming interface, and the second process invoking a graphics processing unit via the programming interface corresponding to the first process in response to the running request corresponding to the first process comprises:
determining by the second process a programming interface corresponding to the first process in response to interface information in a running request corresponding to the first process, and invoking a graphics processing unit via the programming interface corresponding to the first process.

In some embodiments, the programming interface is a unified computing apparatus architecture driven application programming interface.

In some embodiments, the first processes is a plurality of processes.

In a second aspect, the present application provides a central processing unit for implementing the method of any one of the first aspect.

In a third aspect, the present application provides a control chip comprising the central processing unit according to the second aspect and a graphics processing unit.

In a fourth aspect, the present application provides a vehicle in which the control chip according to the third aspect is provided.

In a fifth aspect, the present application provides an electronic apparatus comprising a memory, a central processing unit, and a graphics processing unit;
wherein the memory is used for storing instructions executable by the central processing unit;
wherein the central processing unit is used to perform the method of any one of the first aspect in accordance with the executable instructions.

In a sixth aspect, the present application provides a computer-readable storage medium. The computer-readable storage medium has stored therein computer-executable instructions which, when executed by a processor, implement the method of any one of the first aspect.

In a seventh aspect, the present application provides a computer program product comprising a computer program which, when executed by a processor, implements the method of any of the first aspect.

The present application provides a method for invoking a graphics processing unit, a central processing unit and an apparatus. The method is applied to the central processing unit, the central processing unit having a first process and a second process running therein, the method comprising: in response to an invoking instruction which is used for instructing to invoke a programming interface corresponding to an execution task of the first process, invoking by the first process a hijacking code corresponding to the programming interface, wherein the hijacking code is used for instructing to send a running request; running by the first process the hijacking code, and sending a running request corresponding to the first process to a second process, wherein the running request is used for instructing the second process to invoke the programming interface; and invoking a graphics processing unit by the second process via a programming interface corresponding to the first process in response to the running request corresponding to the first process, and executing an execution task of the first process by the graphics processing unit so as to improve the processing efficiency of the execution task.

### BRIEF DESCRIPTION OF THE DRAWINGS

The accompanying drawings, which are incorporated in and constitute a part of this description, illustrate embodiments consistent with the application and, together with the description, serve to explain the principles of the application.
Fig. 1 is a flow diagram illustrating a method for invoking a graphics processing unit according to an embodiment of the present application;
Fig. 2 is a schematic diagram of a first application scenario provided by an embodiment of the present application;
Fig. 3 is a flow diagram of a method for sending storage data to a graphics processing unit according to an embodiment of the present application;
Fig. 4 is a schematic scenario diagram of data transmission between a first process and a second process provided in an embodiment of the present application;
Fig. 5 is a flow diagram illustrating a method for sending a running request from a first process to a second process according to an embodiment of the present application;
Fig. 6 is a schematic diagram of a second application scenario provided by an embodiment of the present application;
Fig. 7 is a flow diagram illustrating a method for sending a running request from a first process to a second process according to another embodiment of the present application;
Fig. 8 is a flow diagram illustrating a manner in which a second process returns a running result to a first process according to an embodiment of the present application;
Fig. 9 is a schematic diagram of a third application scenario provided by an embodiment of the present application;
Fig. 10 is a schematic diagram of a fourth application scenario provided by an embodiment of the present application;
Fig. 11 is a flow diagram illustrating a method for establishing a communication connection between a first process and a second process according to an embodiment of the present application;
Fig. 12 is a schematic diagram of a fifth application scenario provided by an embodiment of the present application;
Fig. 13 is a flow diagram illustrating a method for invoking a graphics processing unit by a second process according to an embodiment of the present application;
Fig. 14 is a flow diagram illustrating the operation of a graphics processing unit according to an embodiment of the present application;
Fig. 15 is a structure diagram of an electronic apparatus according to an embodiment of the present application.

Specific embodiments of the present application have been shown by the above drawings and will be described in greater detail hereinafter. The drawings and the text description are not intended to limit the scope of the concepts of the present application in any way, but rather to illustrate the concepts of the present application to one of ordinary skill in the art by reference to specific embodiments.

### DETAILED DESCRIPTION

Reference will now be made in detail to exemplary embodiments, examples of which are illustrated in the accompanying drawings. Where the following description refers to the accompanying drawings, like numbers in different drawings indicate the same or similar elements, unless otherwise indicated. The embodiments described in the following illustrative embodiments do not represent all embodiments consistent with the present application. Rather, they are merely examples of devices and methods that are consistent with certain aspects of the present application.

With the continuous development of artificial intelligence and in-depth learning, more computing resources of central processing unit are generally consumed when the above-mentioned technology is used to perform related computing or processing. Due to the limitation of central processing unit's running resources, when computing tasks need a large amount of computing resources, the central processing unit can not provide the computing results corresponding to computing tasks in time, and the processing efficiency is low.

A graphics processing unit (GPU) is a microprocessor with powerful computing capabilities that can be used to assist a central processing unit (CPU) in performing computing tasks such as image processing. How to improve the processing efficiency of computing tasks by invoking graphics processing unit is an urgent problem.

In an example, a process in a central processing unit that needs to invoke a graphics processing unit may implement an invoke to the graphics processing unit by directly invoking the programming interface of the graphics processing unit. However, due to the limitation of GPU hardware resources, the existing GPU does not support the simultaneous access of multiple processes, which results in the waste of a large amount of computing resources in GPU.

The present application provides a method for invoking a graphics processing unit, a central processing unit and an apparatus to solve at least one of the above-mentioned technical problems.

The technical solutions of the present application and how the technical solutions of the present application solve the above technical problems are described in detail in the following specific embodiments. The following specific embodiments may be combined with one another, and the same or similar concepts or processes may not be repeated in some embodiments. Hereinafter, the embodiments of the present application will be described with reference to the accompanying drawings.

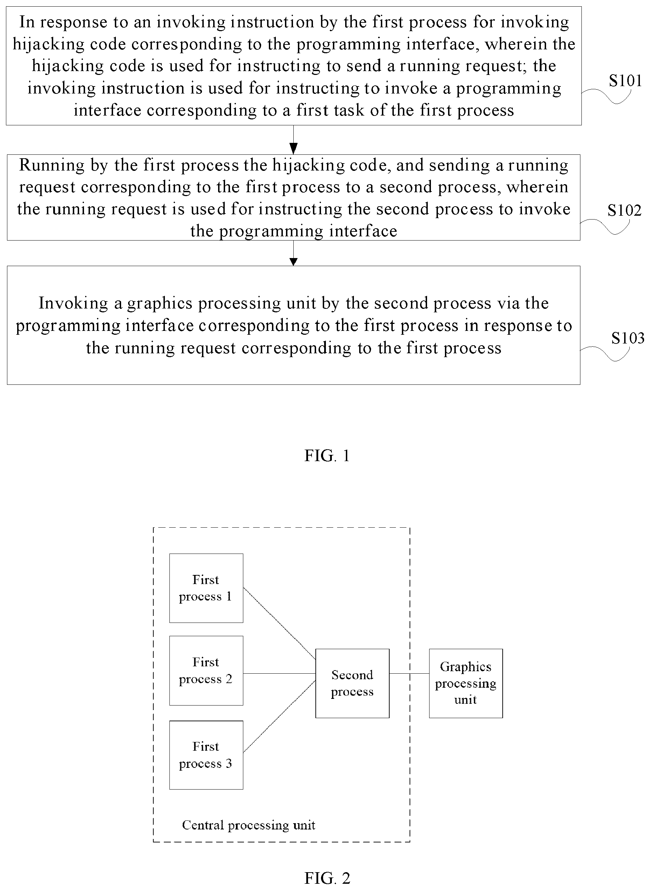

Fig. 1 is a flow diagram illustrating a method for invoking a graphics processing unit according to an embodiment of the present application. The method of the present embodiment is applied to a central processing unit. The central processing unit has a first process and a second process running therein. In some embodiments, the invoking method for the graphics processing unit provided by embodiments of the present application may also be applied to an embedded apparatus, for example, a Xavier chip with GPU and CPU integrated therein, which may be mounted in a vehicle for processing autonomous driving data from vehicle radar, cameras, LIDAR and ultrasound systems.

The method provided in this embodiment includes the steps of:

S101, in response to an invoking instruction which is used for instructing to invoke a programming interface corresponding to an execution task of the first process, invoking by the first process a hijacking code corresponding to the programming interface, wherein the hijacking code is used for instructing to send a running request.

Illustratively, when a process needs to invoke a graphics processing unit, this is typically accomplished by invoking a programming interface of the graphics processing unit, parsing the programming interface, and executing the execution code of the programming interface, which can be understood to be the specific execution logic of the programming interface provided by the graphics processing unit. In this embodiment, when a first process needs to invoke a programming interface of a graphics processing unit during execution, the first process, in response to an invoking instruction, directly invokes hijacking code corresponding to the programming interface, where the hijacking code is used for characterizing sending a running request to a second process. That is, when the first process responds to an invoking instruction invoking a programming interface corresponding to an execution task of the first process, the first process actually invokes hijacking code corresponding to the programming interface.

In an example, the programming interface is a unified computing apparatus architecture driven application programming interface.

In an example, in order for the first process to execute a hijacked file corresponding to an execution task of the first process when invoking a programming interface corresponding to the execution task of the first process, the hijacking can be performed by executing the execution file corresponding to the interface. For example, if the execution codes of the programming interface provided by a developer of a graphics processing unit are all stored in a libcuda.so library, and a programming interface of a certain graphics processing unit is specifically invoked, the first process parses an instruction which invokes the programming interface, and then searches for the execution code corresponding to the programming interface which needs to be invoked currently through the libcuda.so library. In this embodiment, in order to enable the first process to invoke the hijacking code corresponding to the programming interface when responding to the invoking instruction, the execution code contained in the libcuda.so library may be replaced, and the execution code corresponding to each programming interface may be replaced with the hijacking code. Furthermore, when the first process responds to the invoking instruction, the specific execution code is the hijacking code rather than the original execution code.

S102, running by the first process the hijacking code, and sending a running request corresponding to the first process to a second process, wherein the running request is used for instructing the second process to invoke the programming interface.

Illustratively, after the first process runs hijacking code, the first process may send a running request to a second process instructing the second process to invoke a programming interface. That is, the first process sends an original request for invoking the programming interface to the second process by performing steps S101 and S 102, so that the second process invokes the programming interface that the first process originally needs to invoke.

S103, invoking a graphics processing unit by the second process via the programming interface corresponding to the first process in response to the running request corresponding to the first process.

Illustratively, the second process in the present embodiment may receive a running request sent by the first process, and based on the received running request corresponding to the first process, invoke a programming interface corresponding to the running request, thereby implementing an invoke to the graphics processing unit.

In an example, a plurality of first processes run in a central processing unit. The plurality of first processes may each implement an invoke to the graphics processing unit by steps S101-S103 in the embodiment shown in Fig. 1. Specifically, when the second process receives running requests sent by the plurality of first processes, the second process may respond to the running requests corresponding to each of the first processes in turn based on the time sequence in which the plurality of first processes send the running requests. Alternatively, the running request sent by each first process further includes a priority level corresponding to the running request. The second process can respond to the running request sent by each first process based on the ranking order of the priority level.

In an example, the interface information for the programming interface is included in the running request, which may include, for example, an identification of the programming interface, parameters required by the programming interface, etc. After the second process receives the running request, it will respond to the interface information in the running request corresponding to the first process, parse the received interface information, and determine a programming interface the first process needs to invoke. Then, the second process invokes the graphics processing unit by the determined programming interface.

In an example, a parameter (e.g., a kernel parameter) of a computing unit in the graphics processing unit is also included in the running request. When the second process receives the parameter of the computing unit sent by the first process, an invoke to the computing unit in the graphics processing unit may be implemented based on the received parameter of the computing unit. In a possible case, a parameter of a computing unit in a running request is included in a function starting the computing unit. The first process needs to determine a parameter of a computing unit to be invoked in the function of the computing unit according to the length of a pointer and the number of two-dimensional pointers obtained by parsing from the second process.

For example, Fig. 2 is a schematic diagram of a first application scenario provided by an embodiment of the present application. As shown in Fig. 2, the central processing unit includes a second process and three different first processes, which are respectively indicated as a first process 1, a first process 2 and a first process 3. Three first processes may implement a plurality of first process invokes to the graphics processing unit by sending a running request to a second process and then implementing the invokes to the graphics processing unit by the second process.

In this embodiment, one first process and one second process run in the central processing unit. When there is a first process needing to invoke a graphics processing unit, the first process invokes hijacking code corresponding to a programming interface in the invoking instruction in response to the invoking instruction, and then the first process sends a running request to the second process by running the hijacking code, and instructs the second process to invoke a programming interface that the first process originally needs to invoke through the running request. Then the graphics processing unit executes a corresponding execution task so as to improve the processing efficiency of the execution task. Furthermore, the method provided by the present embodiment is also applicable to an application scenario where a plurality of first processes need to invoke a graphics processing unit. When there are a plurality of first processes needing to invoke the graphics processing unit in the central processing unit, the original execution steps of the plurality of first processes needing to invoke the graphics processing unit are all executed by the second process. Namely, the second process implements the invokes of the plurality of first processes to the graphics processing unit. However, with regard to the graphics processing unit, only the second process currently invokes the graphics processing unit, it achieves the effect of plurality of first processes invoking the graphics processing unit at the same time, and improves the resource utilization rate of the graphics processing unit.

In some embodiments, the invoking instruction indicates that the invoking programming interface has an invoking function identification for indicating a function type including a normal type and a hidden type. The execution code corresponding to a programming interface of the normal type is open source code. In addition, a preset hijacking library is provided in this embodiment. The preset hijacking library can be stored in the memory of the central processing unit or the memory of the electronic apparatus where the central processing unit is located. The storage location of the preset hijacking library is not particularly limited here. The preset hijacking library includes a plurality of hijacking codes. The hijacking codes are in one-to-one correspondence with the programming interface.

In an example, a correspondence may be established between the hijacking code and the programming interface by setting the same invoking function identification. When the first process determines that the function type of the programming interface to be invoked is a common type, hijacking code corresponding to the invoking function identification of the programming interface can be searched in a preset hijacking library according to the invoking function identification.

In a possible case, the execution code corresponding to the hidden type programming interface is not open-source. The user can only parse to the function pointer of the hidden type programming interface. The function pointer is used for pointing to the execution code of the programming interface. That is to say, when the process invokes the hidden type programming interface, it is necessary to firstly determine the function pointer corresponding to the programming interface, and determine the execution code corresponding to the programming interface based on the function pointer. Therefore, with regard to a hidden type of programming interface, a plurality of hijacking pointers and hijacking code corresponding to each hijacking pointer are further provided in the preset hijacking library. Each hijacking pointer further corresponds to an invoking function identification.

When the first process determines that the function type of the programming interface to be invoked is a hidden type, the first process needs to determine a hijacking pointer corresponding to the invoking function identification of the programming interface in the preset hijacking library, and determine hijacking code corresponding to the hijacking pointer according to the hijacking pointer.

In this embodiment, when the first process invokes the hijacking code corresponding to the programming interface in response to the invoking instruction, the hijacking code corresponding to the programming interface is determined in different ways based on the function type of the programming interface corresponding to the invoking instruction, so as to ensure the accuracy of the first process sending the running request to the second process.

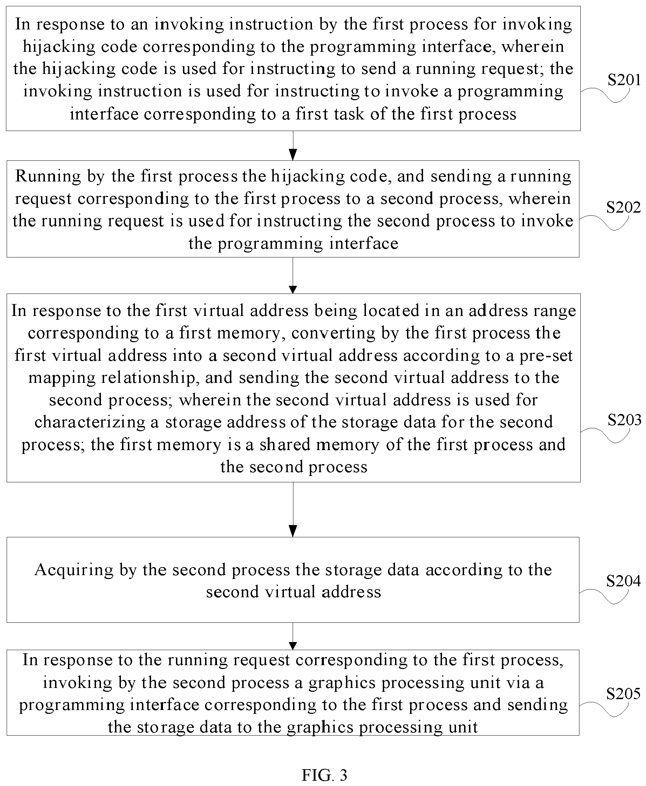

In some embodiments, Fig. 3 is a flow diagram of a method for sending storage data to a graphics processing unit according to an embodiment of the present application. When the execution task in the invoking instruction is used for characterizing that the first process sends the storage data to the graphic memory in the graphics processing unit, the execution task includes a first virtual address. The first virtual address is used for characterizing a storage address of the data for the first process. When the first process needs to send the storage data to the graphics processing unit by invoking the programming interface of the graphics processing unit, on the basis of the above-mentioned invoking method for the graphics processing unit shown in Fig. 1, after step S102, the method further comprises the following steps:

S201, in response to an invoking instruction which is used for instructing to invoke a programming interface corresponding to an execution task of the first process, invoking by the first process a hijacking code corresponding to the programming interface, wherein the hijacking code is used for instructing to send a running request.

Illustratively, the specific principle of step S201 can be referred to step S101 in Fig. 1, and will not be described in detail herein.

S202, running by the first process the hijacking code, and sending by the first process a running request corresponding to the first process to a second process, wherein the running request is used for instructing the second process to invoke the programming interface.

Illustratively, the specific principle of step S202 can be referred to as step S101 in Fig. 1, and will not be described in detail herein.

S203, in response to the first virtual address being located in an address range corresponding to a first memory, converting by the first process the first virtual address into a second virtual address according to a pre-set mapping relationship, and sending by the first process the second virtual address to the second process; wherein the second virtual address is used for characterizing a storage address of the storage data for the second process; the first memory is a shared memory of the first process and the second process.

Illustratively, in this embodiment, when the first process needs to send the storage data to the graphics processing unit, since the invoking of the programming interface of the graphics processing unit by the first process is executed by the second process, the first process also needs to send the storage data to the second process, so that when the second process invokes the programming interface of the graphics processing unit, the storage data acquired by the second process can be sent to the graphics processing unit. In addition, a first memory is provided. The first memory is used as a shared memory of the first process and the second process.

If the first process determines that the first virtual address contained in the execution task is located within the address range of the first memory. Since for the same storage space, different processes determine different storage addresses when storing data in the same storage space, the first process also needs to convert the first virtual address corresponding to the storage data into an address which can be recognized by the second process. Specifically, the first process can convert a first virtual address corresponding to the storage data into a second virtual address based on a pre-set mapping relationship. The second virtual address is used for characterizing a storage address of the storage data for the second process. Then the first process sends the second virtual address to the second process, so that the second process can acquire the storage data in the first memory via the second virtual address. When the second process invokes the programming interface in the running request sent by the first process, the resulting storage data is sent to the graphics processing unit.

In an example, shared memory between a first process and a second process may be created for the second process. After the second process acquires the storage data from the shared memory, the second process may release the shared memory and save storage resources.

Here, it should be noted that the shared memory (i.e., the first memory) of the first process and the second process may be applied for creation by the first process or may be applied for creation by the second process. This is not particularly limited.

S204, acquiring by the second process the storage data according to the second virtual address.

Illustratively, when the second process receives the second virtual address sent by the first process, the second process search the storage data corresponding to the second virtual address in the first memory. The storage data is the data which should be sent to the graphic memory of the graphics processing unit by the first process.

S205, in response to the running request corresponding to the first process, invoking by the second process a graphics processing unit via a programming interface corresponding to the first process and sending by the second process the storage data to the graphics processing unit.

Illustratively, when the second process invokes the programming interface in the running request sent by the first process, the second process also sends the resulting storage data to the graphics processing unit.

In this embodiment, when the first process needs to send storage data to the graphics processing unit, if the first process determines that the first virtual address corresponding to the storage data is located in an address range of the first memory, the first process can convert the first virtual address into the second virtual address. Then the second process can acquire the storage data from the first memory based on the second virtual address. When the second process receives a running request of the first process, the storage data is sent to the graphics processing unit while invoking an interface in the running request.

In some embodiments, based on the method shown in Fig. 3, the method for sending storage data to a graphics processing unit provided in the present embodiment further comprises the following steps. The first process sends the storage data acquired according to the first virtual address to the first memory in response to the first virtual address being outside the address range corresponding to the first memory. The second process acquires the storage data from the first memory.

Illustratively, the first process may store the storage data in the first memory if the first process determines that the storage location of the first virtual address storing the data is not located in the first memory, i.e., the storage data is not stored in the shared memory of the first process and the second process. Thereafter, the second process may acquire the storage data from the first memory. In an example, when the second process acquires the storage data from the first memory, the first process may send a storage address of the storage data in the first memory to the second process, then the second process may acquire the storage data in the first memory based on the storage address sent by the first process.

In an example, when the first process sends the storage data to the first memory, it is contemplated that the storage data may be stored in the first memory all at once.

Alternatively, in an example, the first memory comprises a first sub-memory and a second sub-memory. The first process divides the acquired storage data into a plurality of sub-storage data, and sequentially and alternately transmits the plurality of sub-storage data to the first sub-memory and the second sub-memory. The second process alternately acquires a plurality of sub-storage data from the first sub-memory and the second sub-memory.

Illustratively, the first process may split the storage data into a plurality of sub-storage data, and then alternately store the plurality of sub-storage data in the first sub-memory and the second sub-memory that have been divided in the first memory in sequence. Thereafter, the second process may alternately acquire a plurality of sub-storage data alternately sent by the first process from the first sub-memory and the second sub-memory divided in the first memory, thereby improving data sending efficiency.

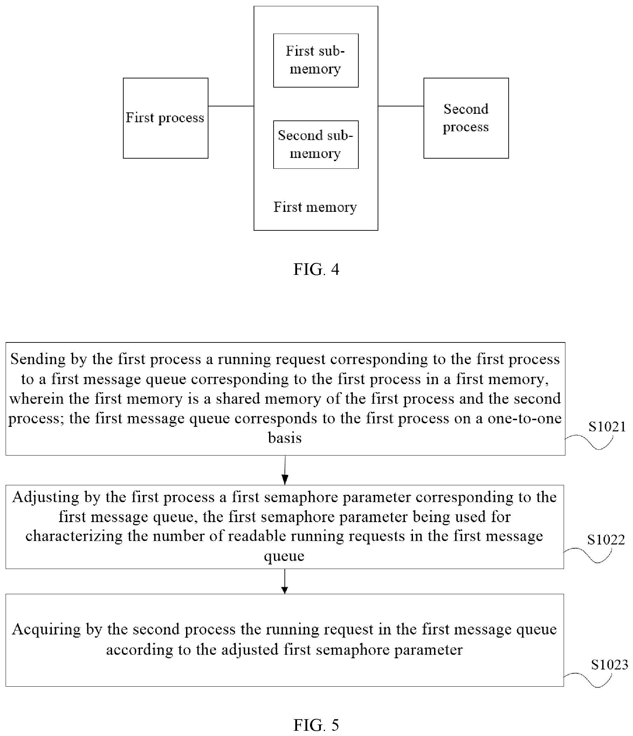

For example, Fig. 4 is a schematic diagram of data transmission between a first process and a second process provided in an embodiment of the present application. In the figure, the first memory shared by the first process and the second process is divided into two sub-memories, namely, a first sub-memory and a second sub-memory. And, the storage data is split into a plurality of sub-storage data. When the first process sends storage data to the first memory, the plurality of sub-storage data may be sent alternately to the first sub-memory and the second sub-memory in the first memory. In addition, at the same time, the second process can also acquire the sub-storage data from the first sub-memory and the second sub-memory alternately in sequence.

For example, when the storage data is divided into sub-storage data 1, sub-storage data 2, sub-storage data 3 and sub-storage data 4, the sub-storage data 1 and the sub-storage data 2 are firstly transmitted to the first sub-memory and the second sub-memory in sequence. Then, the second process can also acquire the sub-storage data 1 from the first sub-memory. After the second process acquires the sub-storage data 1, the first process can store the sub-storage data 3 to the first sub-memory. When the first process sends the sub-storage data 3, the second process can continue to acquire the storage data 2 from the second sub-memory. Furthermore, by means of the above-mentioned first process alternately storing the sub-storage data and the second process alternately acquiring the sub-storage data in the first memory, the time for data transmission between the first process and the second process can be saved. By means of dividing the first memory into two sub-memories, the problem of the first memory occupying a large storage space can also be avoided, and storage resources are saved.

In some embodiments, when step S102 is performed, namely, when the first process sends a running request corresponding to the first process to the second process, in particular, the following steps can be performed. As shown in the figure, Fig. 5 is a flow diagram illustrating a method for sending a running request from a first process to a second process according to an embodiment of the present application.

S 1021, sending by the first process a running request corresponding to the first process to a first message queue corresponding to the first process in a first memory, wherein the first memory is a shared memory of the first process and the second process; the first message queue corresponds to the first process on a one-to-one basis.

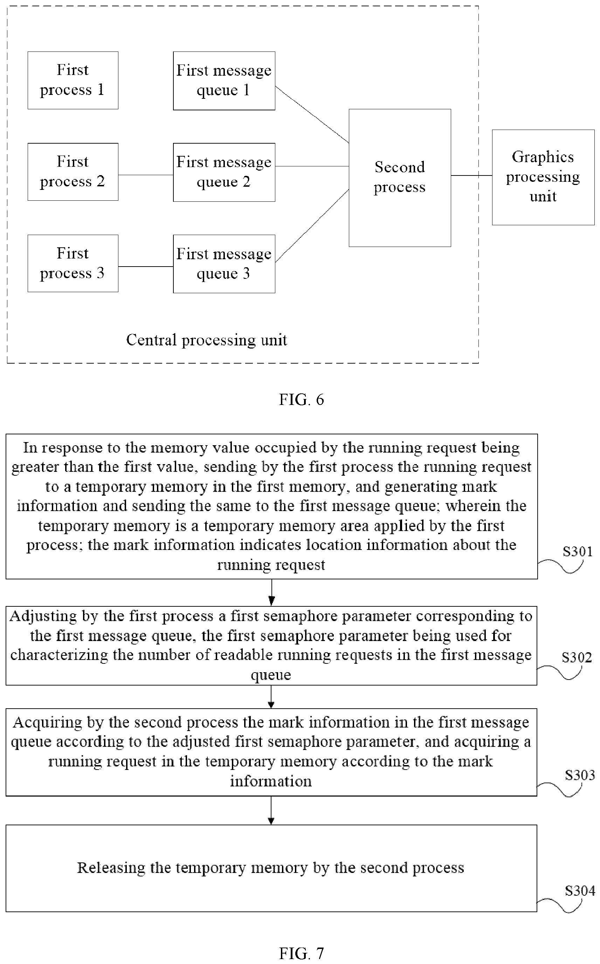

Illustratively, in this embodiment, a first message queue is provided in the first memory shared by the first process and the second process. The first process corresponds to the first message queue on a one-to-one basis. The first message queue is operable to receive a running request sent by the first process corresponding to the message queue. For example, Fig. 6 is a schematic diagram of a second application scenario provided by an embodiment of the present application. Three first processes are included, and each first process has a respective first message queue. In Fig. 6, a first process 1 corresponds to a first message queue 1. A first process 2 corresponds to a first message queue 2. A first process 3 corresponds to a first message queue 3. Each first process can send a running request to the second process via its corresponding first message queue.

S 1022, adjusting by the first process a first semaphore parameter corresponding to the first message queue, the first semaphore parameter being used for characterizing the number of readable running requests in the first message queue.

Illustratively, the first message queue is also correspondingly provided with a first semaphore parameter. The first semaphore parameter can be used to characterize the number of running requests stored in the first message queue. The second process can determine whether a running request currently exists in the first message queue based on the value of the first signal parameter. After the first process sends the to-be-sent running request to the first message queue corresponding to the first process, the first process adjusts the first semaphore parameter, adjusts the first semaphore parameter to the number of the running requests in the current first message queue, and then notifies the second process to acquire the running request in the first message queue.

S1023, acquiring by the second process the running request in the first message queue according to the adjusted first semaphore parameter.

Illustratively, the second process may determine whether a running request exists in the current message queue by monitoring the first semaphore parameter. After the first process stores the running request in the first message queue and adjusts the first semaphore parameter, the second process may acquire the running request in the first message queue based on the adjusted semaphore parameter.

For example, the first message queue may initially set a first semaphore parameter corresponding thereto as 0. Then, when the first process sends four running requests to the first message queue, the first semaphore parameter may be set as 4. After that, the second process monitors that the value of the first semaphore parameter is not equal to 0, the second process acquires the running requests from the first message queue successively. Furthermore, when the second process fetches a running request from the first message queue, the value of the first semaphore parameter may also be adjusted correspondingly. For example, when the second process fetches a running request from the first message queue, the first semaphore parameter may be reduced by 1. That is, the first semaphore parameter is adjusted from 4 to 3.

In this embodiment, the first process may send a running request to the second process via the first message queue. Also, the first process may notify the second process to acquire a running request from the first message queue based on adjusting the semaphore of the first message queue.

In an example, when the first process sends a running request to the first message queue, in particular, the first process may also determine a memory value occupied by the running request. In response to the memory value occupied by the running request being less than or equal to the first value, the first process sends the running request to the first message queue.

Illustratively, when the first process determines that the memory value corresponding to the running request is less than or equal to the first value, the first process may send the running request directly to a first message queue in the first memory corresponding to the first process.

In another example, Fig. 7 is a flow diagram illustrating a method for sending a running request from a first process to a second process according to another embodiment of the present application.

S301, in response to the memory value occupied by the running request being greater than the first value, sending by the first process the running request to a temporary memory in the first memory, and generating marking information and sending the marking information to the first message queue by the first process; wherein the temporary memory is a temporary memory area applied by the first process; the marking information indicates location information about the running request.

Illustratively, when the first process sends the running request to the first message queue, if the first process determines that the memory value occupied by the running request is greater than the first value, the first process may apply for a temporary memory in the first memory, after which the first process may send the running request to the temporary memory. In addition, after the first process successfully applies for the temporary memory, marking information also generated based on the position information of the temporary memory is stored in the first message queue corresponding to the first process, so that the second process can acquire a running request in the temporary memory based on the position information of the temporary memory in the marking information after acquiring the marking information in the first message queue.

S302, adjusting by the first process a first semaphore parameter corresponding to the first message queue to obtain an adjusted first semaphore parameter, the first semaphore parameter being used for characterizing the number of readable running requests in the first message queue.

S303, acquiring by the second process the marking information in the first message queue according to the adjusted first semaphore parameter, and acquiring by the second process a running request in the temporary memory according to the marking information.

Illustratively, after determining that the first process adjusts the first semaphore parameter of the first message queue, the second process acquires the marking information from the first message queue, determines an address of a running request corresponding to the marking information, and then acquires the running request according to the determined address.

S304, releasing the temporary memory by the second process.

Illustratively, after the second process acquires the running request, the temporary memory may be requested to be released, or the first process may be notified, so that the first process releases the temporary memory, thereby avoiding waste of storage resources.

In the present embodiment, in order to avoid the phenomenon that the storage space occupied by the first message queue is larger when the first process transmits the running request via the first message queue between the first process and the second process, in the present application, when the first process needs to send the running request, the first process will determine the sending method of the running request according to the size of the memory value occupied by the running request currently required to be sent. If the memory value occupied by the running request is relatively large, the first process may apply for a temporary memory in the first memory for storing the running request, and store marking information in the first message queue, so that the second process, after acquiring the marking information from the first message queue, may acquire the running request in the temporary memory based on the marking information, avoiding the problem of the relatively large storage occupied by the first message queue.

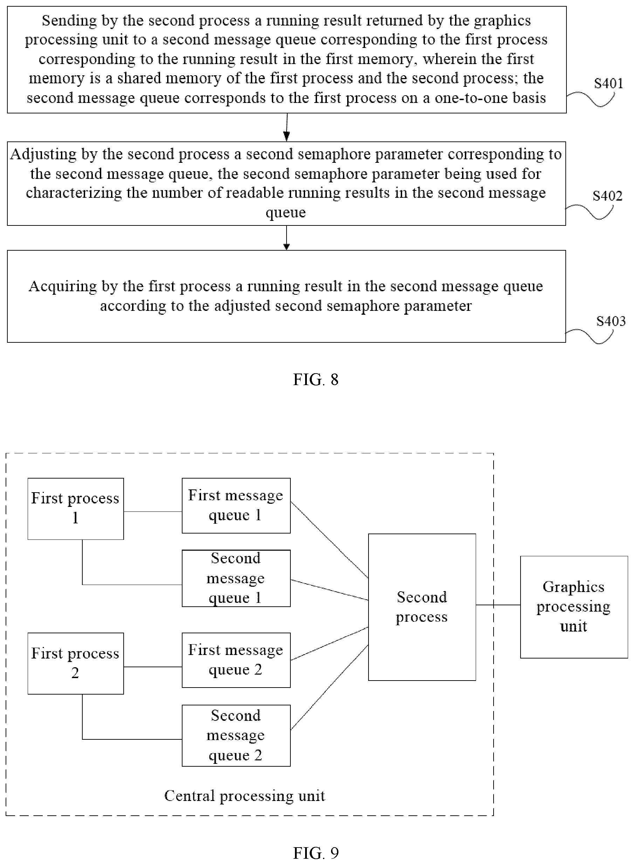

In some embodiments, Fig. 8 is a flow diagram illustrating a manner in which a second process returns a running result to a first process according to an embodiment of the present application. On the basis of the flow schematic diagram of the method shown in Fig. 1, the present application further comprises the following steps:

S401, sending by the second process a running result returned by the graphics processing unit to a second message queue corresponding to the first process corresponding to the running result in the first memory, wherein the first memory is a shared memory of the first process and the second process; the second message queue corresponds to the first process on a one-to-one basis.

Illustratively, step S401 may be performed after step S103 in Fig. 1. In this embodiment, after the second process receives the running result returned by the graphics processing unit, the second process may also send the running result to the first process by setting a message queue. Specifically, a plurality of second message queues are provided in a first memory shared by the first process and a second process. The second message queues are in one-to-one correspondence with the first process. When the second process acquires a running result returned by the graphics processing unit, the running result is sent to a second message queue corresponding to the first process corresponding to the running result. It should be noted that each first process has its corresponding running request, and each running request has its corresponding running result.

In an example, the running result acquired by the second process includes an identifier of the first process. The second process can determine a second message queue corresponding to the first process based on the identifier of the first process included in the running request. Then the second process can send the running result to the second message queue.

For example, Fig. 9 is a schematic diagram of a third application scenario provided by an embodiment of the present application. In the figure, a first process corresponds to a first message queue and a second message queue. The first message queue can be used for storing running requests sent by the first process to the second process. The second message queue can be used for storing running results returned by the second process to the first process. As shown in Fig. 9, the first process 1 corresponds to a first message queue 1 and a second message queue 1. The first process 2 corresponds to a first message queue 2 and a second message queue 2.

S402, adjusting by the second process a second semaphore parameter corresponding to the second message queue, the second semaphore parameter being used for characterizing the number of readable running results in the second message queue.

Illustratively, the second process may notify the first process to acquire the running result in the second message queue by adjusting a second semaphore parameter corresponding to the second message queue. The second semaphore parameter may be used to characterize the number of running results currently readable in the second message queue.

S403, acquiring by the first process a running result in the second message queue according to the adjusted second semaphore parameter.

Illustratively, after the first process monitors that the second semaphore parameter is adjusted by the first process, the first process acquires a running request from the second message queue at this time.

In an example, the first process comprises a plurality of first threads, and the first threads correspond to the first thread identifications on a one-to-one basis. That is, each first thread has its first thread identification. The running result has a first thread identification. The first process wakes up the plurality of first threads in the first process according to the adjusted second semaphore parameter, so that the plurality of first threads respectively acquire a running result corresponding to the first thread identification of each first thread in the second message queue. That is, the first thread is a requesting thread in the first process for requesting an invoke to the graphics processing unit.

Illustratively, in this example, the first process comprises a plurality of first threads. Each first thread is correspondingly provided with a first thread identification, i.e., a one-to-one correspondence between the first thread and the first thread identification. In addition, the running result has a first thread identification. When step S403 is executed, the first process wakes up a plurality of first threads of the first process according to the second semaphore parameter, so that the plurality of first threads respectively acquire a running result corresponding to the first thread identification of each first thread in the second message queue.

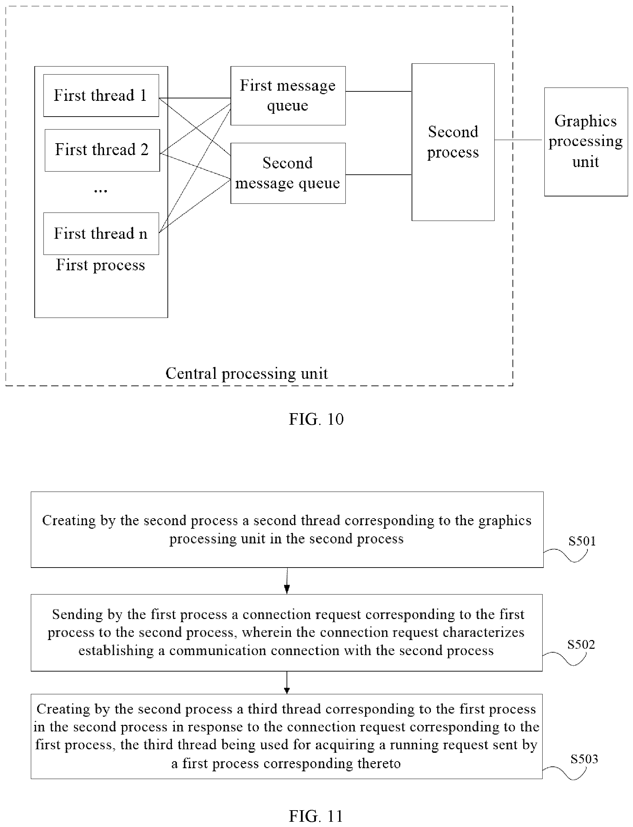

Fig. 10 is a schematic diagram of a fourth application scenario provided by an embodiment of the present application. As shown in Fig. 10, the first process in Fig. 10 includes a plurality of first threads (denoted by a first thread n in the figure, where n is a positive integer). The first thread in the first process may send the running request to the second process via the first message queue corresponding to the first process after responding to the invocation request. The second process sends the running result to the second message queue corresponding to the first process after the second process responds to the running request and acquires a running result returned by the graphics processing unit. After the second process adjusts the second semaphore parameter of the second message queue, a plurality of first threads corresponding to the second message queue are woken up. Then the plurality of first threads respectively acquire running results corresponding to respective first thread numbers in the second message queue.

In an example, the acquiring by the first process a running result in the second message queue according to the adjusted second semaphore parameter can be achieved in the following manner: storing by the first process a running result in the second message queue into a container corresponding to the first thread identification in the running result according to the adjusted second semaphore parameter and a pre-set corresponding relationship between the first thread identification and the container, wherein the container is a storage structure in the form of a linked list. The first process wakes up the first thread corresponding to the container, so that the first thread acquires a running result corresponding to the first thread identification of the first thread from the corresponding container.

Illustratively, since the plurality of first threads are waken up and the second message queue can only be accessed by one first thread at the same time, the plurality of first threads need to compete for the lock of the second message queue to enable access to the second message queue. When accessing data in the second message queue, the data need to be sequentially fetched in the order of storage. Thus, it is prone to slow down the first thread in the first process fetching data from the second message queue. In order to solve the above-mentioned technical problem, in the present example, a container corresponding to the second message queue is also provided.

After the second process stores the running result in the second message queue and adjusts a second semaphore parameter of the second message queue, the first process stores a running result in the second message queue in a container corresponding to the first thread identification in the running result according to the adjusted second semaphore parameter and a pre-set corresponding relationship between the first thread identification and the container. The container is a storage structure in the form of a linked list. That is, the first process may store the running request fetched from the second message queue into a container corresponding to the first thread identification in the running request. When a plurality of running requests need to be stored in the container, the plurality of running requests can be stored in the container in the form of a linked list. Then, the first process wakes up the corresponding first thread based on the corresponding relationship between the container and the first thread identification, so that the first thread acquires a running result which has the same first thread identification as the first thread identification from the container.

Note that in this embodiment, the number of containers may be plural, i.e., the container is a plurality of containers. For example, a second message queue may have a corresponding plurality of containers. Also, one container may correspond to a plurality of first thread identifications. For example, the first process includes 9 first threads, and a first thread identification corresponding to each first thread is respectively identified by numbers 1-9. The first process is also correspondingly provided with 3 containers. A first container can store the running results of the first thread identification being 1-3. A second container can store the running results of the first thread identification being 4-6. A third container may store the running results for the first thread identified as 7-9. In another example, the correspondence between the first thread identification and the container may take the form of a hash, which is not particularly limited.

In this embodiment, by setting a container to store a running request, resource expense caused by a plurality of first threads competing for the same second message queue can be avoided. A storage structure in the form of a linked list in the container can enable the first thread to acquire the running result in the container without sequentially extracting according to the storage order, thereby improving the efficiency of acquiring the running result.

In some embodiments, Fig. 11 is a flow diagram illustrating a method for establishing a communication connection between a first process and a second process according to an embodiment of the present application. Before step S101 in Fig. 1, the method further includes the steps of:

S501, creating by the second process a second thread corresponding to the graphics processing unit in the second process.

Illustratively, in this embodiment, a communication connection is required be established between the first process and the second process before the first process sends the running request to the second process. Upon establishing the communication connection, the second thread is first created in the second process. The second thread is operable to invoke a programming interface of the graphics processing unit. Further, the number of second threads may be determined according to the number of graphics processing units. For example, one second thread may be set to correspond to one graphics processing unit.

S502, sending by the first process a connection request corresponding to the first process to the second process, wherein the connection request characterizes establishing a communication connection with the second process.

Illustratively, whenever a first process is created in the central processing unit, the first process sends a connection request to the second process requesting that a connection be established with the second process. Note that, in the present embodiment, the communication mode between the first process and the second process may be a websocket communication mode, but is not limited to this communication mode.

S503, creating by the second process a third thread corresponding to the first process in the second process in response to the connection request corresponding to the first process, the third thread being used for acquiring a running request sent by a first process corresponding thereto.

Illustratively, after the second process receives the connection request sent by the first process and establishes a communication connection with the first process, a third thread is created in the second process. The third thread can be used for receiving the running request sent by the first process corresponding thereto. Namely, the third thread is a receiving thread for receiving the running request sent by the first process. For example, a third thread may be used to listen for a running request in a first message queue of the first process corresponding thereto.

In an example, when the second process corresponds to a plurality of graphics processing units, the running request also includes an identification of the graphics processing unit that needs to be invoked. The third thread, after acquiring the running request, sends the running request to the second thread corresponding to the graphics processing unit based on the identification of the graphics processing unit included in the running request. Thereafter, the second thread invokes the graphics processing unit in response to the running request sent by the third thread, i.e., the second thread is a processing thread for resolving the running request sent by the third thread.

In an example, when the first process invokes a kernel in the graphics processing unit, the first process also writes kernel parameters into the running request.

In an example, after the second process establishes a communication connection with the first process, the second process also records log data during the running of the first process, such as memory occupied by the first process, graphics processing unit resources occupied, etc.

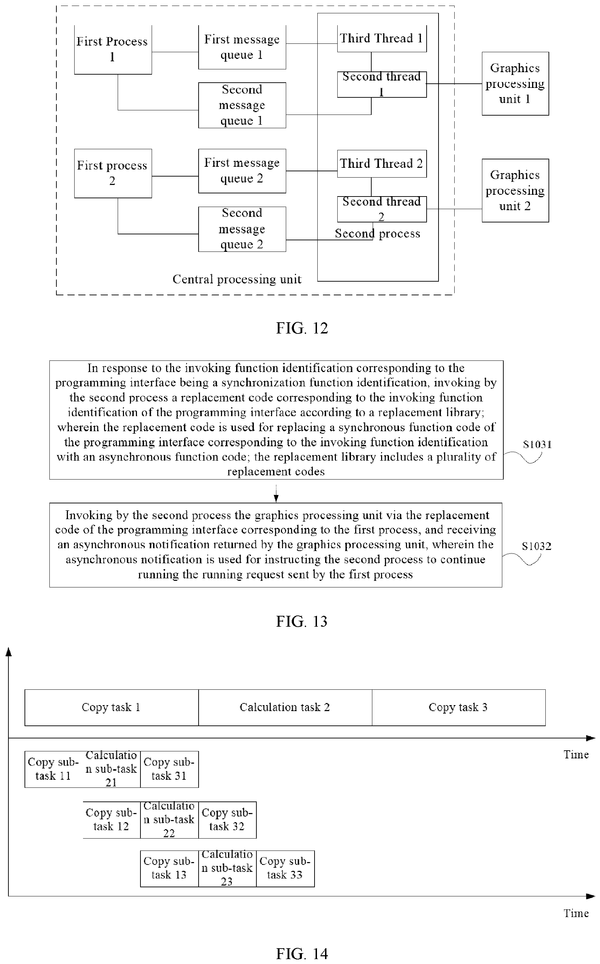

For example, Fig. 12 is a schematic diagram of a fifth application scenario provided by an embodiment of the present application. The figure includes two graphics processing units (represented by a graphics processing unit 1 and an image processor 2 in the figure). For each graphics processing unit, a second thread corresponding to the graphics processing unit on a one-to-one basis is set in the second process (in the figure, the graphics processing unit 1 corresponds to the second thread 1, and the graphics processing unit 2 corresponds to the second thread 2). In addition, a third thread corresponding to the first process on a one-to-one basis is further provided in the second process. After acquiring the running request sent by the first process, the third thread can send the running request to the second thread corresponding to the to-be-invoked graphics processing unit. Then the second thread realizes the invoke to the graphics processing unit. If the first process 1 needs to invoke the graphics processing unit 1, the first process 1 sends a running request to the third thread 1 corresponding to the first process 1 via the first message queue 1. Then the third thread 1 determines that the received running request needs to invoke the graphics processing unit 1 and sends the running request to the second thread 1, so that the second thread 1 completes the invoke to the graphics processing unit 1 based on the running request.

In the present embodiment, in the second process, after receiving the running request sent by the first process by setting the third thread corresponding to the first process on a one-to-one basis in the second process, the third thread sends the running request to the second thread corresponding to the to-be-invoked graphics processing unit characterized in the running request, and then the second thread invokes the to-be-invoked graphics processing unit characterized in the running request, thereby improving the resource utilization rate of the graphics processing unit.

In some embodiments, Fig. 13 is a flow diagram illustrating a method for invoking a graphics processing unit by a second process according to an embodiment of the present application. As shown in Fig. 13, when the programming interface has an invoking function identification, the executing step S103 can be implemented by the following method:

S1 031, in response to the invoking function identification corresponding to the programming interface being a synchronization function identification, invoking by the second process a replacement code corresponding to the invoking function identification of the programming interface according to a replacement library; wherein the replacement code is used for replacing a synchronous function code of the programming interface corresponding to the invoking function identification with an asynchronous function code; the replacement library comprises a plurality of replacement codes.

Illustratively, in practical applications, the programming interface of the graphics processing unit may also be divided into synchronous types as well as asynchronous types. The synchronous programming interface needs to wait for the graphics processing unit to execute this task before the process in the central processing unit invokes the graphics processing unit again. For an asynchronous type programming interface, the process in the central processing unit can be notified to invoke the graphics processing unit again without waiting for the graphics processing unit to complete this task.

For example, a programming interface of asynchronous type allows the graphics processing unit to compute tasks and the remaining apparatuses to copy data into the graphics processing unit to be executed simultaneously. Fig. 14 is a flow diagram illustrating the operation of a graphics processing unit according to an embodiment of the present application. In the figure, the horizontal axis represents time. The copy task 1, the computing task 2, and the copy task 3 are currently required to be executed in the graphics processing unit. If the invoking programming interface is a programming interface of a synchronous type, it is necessary to wait for one task to be executed before the next task can be executed. As shown in the figure, three tasks are executed successively in a time sequence in the graphics processing unit.

If the interface of the invoked graphics processing unit is an asynchronous type interface, each task in the three tasks can be split into three sub-tasks in the graphics processing unit. For example, the copy task 1 is split a copy sub-task 11, a copy sub-task 12 and a copy sub-task 13. The calculation task 2 is split a calculation sub-task 21, a calculation sub-task 22 and a calculation sub-task 23. The copy task 3 is split into a copy sub-task 31, a copy sub-task 32, and a copy sub-task 33. Thereafter, the sub-tasks included in the three tasks may be alternately executed. For example, in the figure, the copy sub-task 11, the calculation sub-task 21 and the copy sub-task 31 are executed in a time sequence. The copy sub-task 12, the calculation sub-task 22 and a copy sub-task 32 are executed according to a time sequence. The copy sub-task 13, the calculation sub-task 23, and the copy sub-task 33 are executed according to a time sequence. In addition, when the calculation sub-task 21 is executed, the graphics processing unit can also execute the copy sub-task 12 at the same time. When the copy sub-task 31 is executed, the graphics processing unit can also execute the calculation sub-task 22 and the copy sub-task 13 at the same time. When the copy sub-task 32 is executed, the graphics processing unit may also execute the calculation sub-task 23 at the same time. By comparing the duration spent in execution tasks between the asynchronous interface and the synchronous interface, it can be found that the asynchronous interface can reduce the duration spent in execution tasks and improve the efficiency of the graphics processing unit.

Thus, when the programming interface being invoked by the second process is a synchronous type interface, the second process may be in a blocked state before the graphics processing unit does not return a running result. In order to ensure that the second process can continue executing the remaining running requests sent by the first process which have been received and improve the use efficiency of the graphics processing unit, the programming interface in the present embodiment has an invoking function identification, and a replacement library can also be provided in the central processing unit in advance. The replacement library comprises a plurality of replacement codes corresponding to the invoking function identification of the programming interface one by one.

When the second process receives the running request sent by the first process, it is determined whether the invoking function identification corresponding to the invoking programming interface indicated in the running request is a synchronization function identification. If the second process determines that the invoking function identification of the programming interface in the received running request is a synchronous function identification, the second process searches for replacement code corresponding to the invoking function identification of the programming interface in a replacement library according to the set replacement library. The replacement code can replace the synchronous function code of the programming interface to be invoked with asynchronous function code, so that the programming interface actually invoked finally by the second process is an interface having an asynchronous function.

It should be noted that when setting the asynchronous function code in the replacement library, a corresponding asynchronous function code can be set for all the programming interfaces having the synchronous function identification, or the corresponding asynchronous function code can be set for some of the programming interfaces having the synchronous function identification.

In practice, when the first process in the central processing unit needs to copy the data to the graphics processing unit, it is necessary to store the copied data in the page locking memory because of the asynchronous copying, so as to ensure that the page on which the data is located is not replaced during the asynchronous copying. Therefore, if the memory stored in the copied data is not a page locking memory, the synchronous copying can only be performed at this moment. Also, even if the second process determines that the invoking function identification of the invoking programming interface belongs to the synchronous function identification, the memory type in which the data needs to be copied is further determined. If the memory type is a page locking memory, an invoke to the graphics processing unit can be directly realized based on the replacement code in the replacement library. If the memory type is not the page locking storage, the code corresponding to the original programming interface is still executed at this time, i.e., the above-mentioned replacement process is not executed.

S 1032, invoking by the second process the graphics processing unit via the replacement code of the programming interface corresponding to the first process, and receiving by the second process an asynchronous notification returned by the graphics processing unit, wherein the asynchronous notification is used for instructing the second process to continue running the running request sent by the first process.

Illustratively, the second process, after acquiring the replacement code of the programming interface corresponding to the first process, invokes the graphics processing unit based on the replacement code. After the second process invokes the graphics processing unit, it receives an asynchronous notification returned by the graphics processing unit, and continues to process the received running request after the second process receives the asynchronous notification.

In this embodiment, when the second process responds to the running request, in order to avoid that when the programming interface invoked by the second process is an interface of a synchronous type, the second process will be blocked and cannot continue to execute other running requests which have been received. The replacement code corresponding to the programming interface in the replacement library is actually executed when the second process actually invokes the programming interface. Then by executing the replacement code, the second process finally invoked a code function of the programming interface having an asynchronous function. Thereafter, the second process receives the asynchronous notification returned by the graphics processing unit, so that the second process can continue executing the remaining running requests, thereby reducing the problem of low graphics processing unit utilization caused by the second process being blocked.

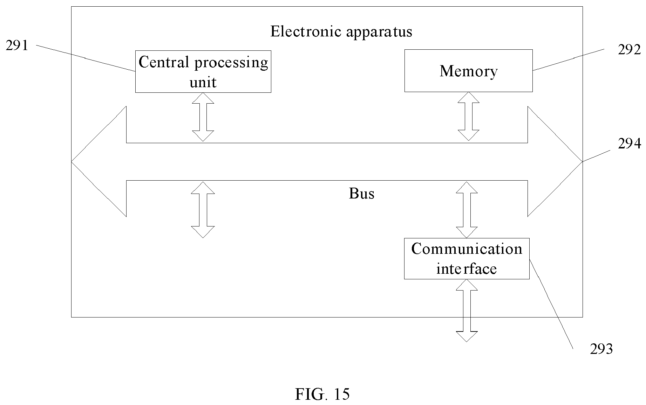

Fig. 15 is a structure diagram of an electronic apparatus according to an embodiment of the present application. As shown in Fig. 15, the electronic apparatus includes: a graphics processing unit (not shown in the figure), and a central processing unit 291. The electronic apparatus further comprise a memory 292 and may also comprise a communication interface 293 and a bus 294. The central processing unit 291, the memory 292, and the communication interface 293 can communicate with each other via the bus 294. The communication interface 293 may be used for information transfer. The central processing unit 291 may invoke logic instructions in the storage 294 to perform the methods of the embodiments described above.

In addition, the logic instructions in the memory 292 described above may be embodied in the form of software functional units, and may be stored in a computer-readable storage medium when sold or used as a stand-alone product.

The memory 292 is a computer-readable storage medium that can be used to store software programs, computer-executable programs, such as program instructions/modules corresponding to methods in embodiments of the present application. The central processing unit 291 executes functional applications and data processing by executing software programs, instructions and modules stored in the memory 292, i.e., so as to implement the method in the above-described method embodiments.

The memory 292 may comprise a program storage area and a data storage area. The program storage area may store an operating system, and an application program required for at least one function. The storage data area may store data or the like created according to the use of the terminal apparatus. In addition, the memory 292 may comprise a high speed random access storage and may also comprise a non-volatile storage.

The present application provides a central processing unit for implementing the method as provided in any of the above embodiments.

The present application provides a control chip including the central processing unit and the graphics processing unit provided in the above-mentioned present application.

The present application provides a vehicle provided with the control chip provided in the present application.

The present application provides a computer-readable storage medium. The computer-readable storage medium has stored therein computer-executable instructions which, when executed by a processor, implement the method provided by any of the above embodiments.

The present application provides a computer program product including a computer program which, when executed by a processor, implements the method provided by any of the embodiments.

Other embodiments of the invention will be apparent to those skilled in the art from consideration of the description and practice of the invention disclosed herein. This application is intended to cover any variations, uses, or adaptations of the invention following, in general, the principles of the invention and including known or customary practice in the art not disclosed in the technical field of this application. It is intended that the description and embodiments be considered as exemplary only, with a true scope of the application being indicated by the following claims.

It should be understood that this application is not limited to the precise structures described above and shown in the accompanying drawings, and that various modifications and changes may be made without departing from the scope thereof. The scope of the present application is limited only by the following claims.

## Claims

1. A method for invoking a graphics processing unit, wherein the method is applied to a central processing unit, the central processing unit having a first process and a second process running therein, the method comprising:
in response to an invoking instruction for invoking a programming interface corresponding to an execution task of the first process, invoking by the first process a hijacking code corresponding to the programming interface;
running by the first process the hijacking code to send a running request corresponding to the first process to a second process, wherein the running request is used for instructing the second process to invoke the programming interface; and
invoking by the second process a graphics processing unit by invoking the programming interface corresponding to the first process in response to the running request.

2. The method according to claim 1, wherein the programming interface has an invoking function identification for indicating a function type; the invoking by the first process the hijacking code corresponding to the programming interface comprises:
in response to the function type of the programming interface being a normal type, invoking by the first process the hijacking code corresponding to the invoking function identification of the programming interface according to a preset hijacking library, wherein the preset hijacking library comprises a plurality of hijacking codes.

3. The method according to claim 2, wherein the invoking by the first process the hijacking code corresponding to the programming interface comprises:
in response to the function type of the programming interface being a hidden type, determining by the first process a hijacking pointer corresponding to the invoking function identification of the programming interface according to the preset hijacking library, wherein the hijacking pointer is used for indicating a location of the hijacking code corresponding to the programming interface; and
invoking by the first process the hijacking code.

4. The method according to any one of claims 1-3, wherein:
the execution task requires the first process sending storage data to a graphic memory in the graphics processing unit;
the execution task comprises a first virtual address, the first virtual address being used for characterizing a storage address of the storage data for the first process;
the method further comprises:
in response to the first virtual address being located in an address range corresponding to a first memory: converting by the first process the first virtual address into a second virtual address according to a pre-set mapping relationship, and sending by the first process the second virtual address to the second process; wherein the second virtual address is used for characterizing a storage address of the storage data for the second process; the first memory is a shared memory of the first process and the second process;
acquiring by the second process the storage data according to the second virtual address; and
sending by the second process the storage data to the graphics processing unit.

5. The method according to claim 4,
wherein the method further comprises:
in response to the first virtual address being outside the address range corresponding to the first memory, sending by the first process the storage data acquired according to the first virtual address to the first memory;
acquiring the storage data from the first memory by the second process;
wherein the first memory comprises a first sub-memory and a second sub-memory; the sending by the first process the storage data acquired according to the first virtual address to the first memory comprises:
dividing by the first process the acquired storage data into a plurality of sub-storage data, and sequentially and alternately transmitting by the first process the plurality of sub-storage data to the first sub-memory and the second sub-memory;
the acquiring the storage data from the first memory by the second process comprises:
alternately acquiring by the second process the plurality of sub-storage data from the first sub-memory and the second sub-memory.

6. The method according to any one of claims 1-5, wherein sending the running request to the second process comprises:
sending by the first process the running request to a first message queue corresponding to the first process in the first memory; wherein the first memory is a shared memory of the first process and the second process; the first message queue corresponds to the first process on a one-to-one basis;
adjusting by the first process a first semaphore parameter of the first message queue, the first semaphore parameter being used for characterizing the number of readable running requests in the first message queue; and
acquiring by the second process the running request in the first message queue according to the adjusted first semaphore parameter.

7. The method according to claim 6,
wherein sending the running request to the first message queue corresponding to the first process in the first memory comprises:
in response to a memory value occupied by the running request being less than or equal to a first value, sending by the first process the running request to the first message queue;
wherein the method further comprises:
in response to the memory value occupied by the running request being greater than the first value: sending by the first process the running request to a temporary memory in the first memory, and generating a marking information by the first process and sending the marking information to the first message queue by the first process; wherein the temporary memory is a temporary memory area applied by the first process; the marking information indicates location information about the running request;
acquiring by the second process the running request in the first message queue according to the adjusted first semaphore parameter comprises:
acquiring by the second process the marking information in the first message queue according to the adjusted first semaphore parameter, and acquiring a running request in the temporary memory according to the marking information;
releasing the temporary memory by the second process.

8. The method according to any one of claims 1-7, wherein the method further comprises:
sending by the second process a running result returned by the graphics processing unit to a second message queue corresponding to the first process in a first memory, wherein the first memory is a shared memory of the first process and the second process; the second message queue corresponds to the first process on a one-to-one basis;
adjusting by the second process a second semaphore parameter of the second message queue to obtain an adjusted second semaphore parameter, the second semaphore parameter being used for characterizing the number of readable running results in the second message queue; and
acquiring by the first process the running result in the second message queue according to the adjusted second semaphore parameter.

9. The method according to claim 8, wherein the first process comprises a plurality of first threads, the first thread corresponding to first thread identification on a one-to-one basis; the running result has a first thread identification;
the acquiring by the first process the running result in the second message queue according to the adjusted second semaphore parameter comprises:
waking up by the first process the plurality of first threads in the first process according to the adjusted second semaphore parameter, so that the plurality of first threads respectively acquire the running result corresponding to the first thread identification of each of the first threads in the second message queue.

10. The method according to claim 8, wherein the first process comprises a plurality of first threads, the first thread corresponding to first thread identification on a one-to-one basis; the running result has a first thread identification;
the acquiring by the first process the running result in the second message queue according to the adjusted second semaphore parameter comprises:
storing by the first process the running result in the second message queue in a container corresponding to the first thread identification in the running result according to the adjusted second semaphore parameter and a pre-set corresponding relationship between the first thread identification and the container, wherein the container is a storage structure in the form of a linked list; and waking up by the first process the first thread corresponding to the container, so that the first thread acquires the running result corresponding to the first thread identification of the first thread from the corresponding container;
wherein the container is a plurality of containers and one container corresponds to a plurality of first thread identifications.

11. The method according to any one of claims 1-10, wherein the method further comprises:
creating by the second process a second thread corresponding to the graphics processing unit in the second process;
sending by the first process a connection request corresponding to the first process to the second process, wherein the connection request characterizes establishing a communication connection with the second process;
creating by the second process a third thread corresponding to the first process in the second process in response to the connection request, the third thread being used for acquiring the running request sent by the first process corresponding thereto;
the second process invoking the graphics processing unit by invoking the programming interface corresponding to the first process in response to the running request comprises:
invoking by the second thread the graphics processing unit by invoking the programming interface in response to the running request sent by the third thread.

12. The method according to any one of claims 1-11, wherein the programming interface has an invoking function identification; the second process invoking the graphics processing unit by invoking the programming interface corresponding to the first process in response to the running request comprises:
in response to the invoking function identification corresponding to the programming interface being a synchronization function identification, invoking by the second process a replacement code corresponding to the invoking function identification of the programming interface according to a replacement library; wherein the replacement code is used for replacing a synchronous function code of the programming interface corresponding to the invoking function identification with an asynchronous function code; the replacement library comprises a plurality of replacement codes; and
invoking by the second process the graphics processing unit by invoking the replacement code of the programming interface corresponding to the first process; and
receiving by the second process an asynchronous notification returned by the graphics processing unit, wherein the asynchronous notification is used for instructing the second process to continue running the running request sent by the first process.

13. The method according to any one of claims 1-12, wherein the running request comprises interface information about the programming interface, and the invoking by the second process the graphics processing unit by invoking the programming interface corresponding to the first process in response to the running request comprises:
determining by the second process the programming interface corresponding to the first process in response to interface information in the running request; and
invoking by the second process the graphics processing unit by invoking the programming interface corresponding to the first process.

14. An electronic apparatus, comprising a memory, a central processing unit, and a graphics processing unit;
wherein the memory is used for storing instructions executable by the central processing unit;
wherein the central processing unit is used to perform, when execute the instructions, a method of any of claims 1-13 in accordance with the executable instructions.

15. A computer-readable storage medium, wherein the computer-readable storage medium has stored therein computer-executable instructions which, when executed by a processor, implement a method of any one of claims 1-13.
